Europäisches Patentamt

European Patent Office

Office européen des brevets

(11) Veröffentlichungsnummer : **0 442 596 B1**

(12) **EUROPÄISCHE PATENTSCHRIFT**

(45) Veröffentlichungstag der Patentschrift :
07.12.94 Patentblatt 94/49

(51) Int. Cl.[5] : **G01J 3/12, G01J 3/36**

(21) Anmeldenummer : 91250043.6

(22) Anmeldetag : 13.02.91

(54) **Echelle-Polychromator.**

(30) Priorität : 15.02.90 DD 337865

(43) Veröffentlichungstag der Anmeldung :
21.08.91 Patentblatt 91/34

(45) Bekanntmachung des Hinweises auf die
Patenterteilung :
07.12.94 Patentblatt 94/49

(84) Benannte Vertragsstaaten :
CH DE FR GB IT LI NL

(56) Entgegenhaltungen :
EP-A- 0 403 228
FR-A- 2 566 902
GB-A- 2 204 964
APPLIED OPTICS, vol. 12, no. 4, April 1973,
New York, US, pages 818-821; F.R.LIPSETT ET
AL: "Varioilluminator"

(56) Entgegenhaltungen :
APPLIED OPTICS, vol. 8, no. 6, June 1969, New
York, US, pages 1133-1140; J.H.CALLOMON
ET AL: "A 4-m Assymetric Czerny-Turner Grating Spectrograph"
APPLIED OPTICS, vol. 8, no. 3, March 1969,
New York, US, pages 649- 651; D.E.BURCH:
"Adjustable bandpass filter emloying a
prism"

(73) Patentinhaber : **BODENSEEWERK
PERKIN-ELMER GMBH
Askaniaweg 4
D-88662 Überlingen (DE)**

(72) Erfinder : **Florek, Stefan, Dr.
Schillerstrasse 7
D-12526 Berlin (DE)**
Erfinder : **Becker-Ross, Helmut, Dr.
Karlstrasse 26
D-12557 Berlin (DE)**

(74) Vertreter : **Walter, Wolf-Jürgen et al
Patentanwälte Felke & Walter
Normannenstrasse 1-2
D-10367 Berlin (DE)**

EP 0 442 596 B1

## Beschreibung

Die Erfindung betrifft einen Echelle-Polychromator und ist anwendbar in Geräten zur spektralphotometrischen Untersuchung von Strahlungsquellen.

Es sind bereits eine Vielzahl verschiedener Echelle-Polychromator-Anordnungen bekannt (US-PS 3 658 423, 4 391 523, 4 690 559, 4 820 048).

Sie besitzen die Gemeinsamkeit, daß die einzelnen Beugungsordnungen des Echelle-Gitters durch mindestens ein zusätzliches Querdispersionselement innerhalb des Spektrometers voneinander getrennt werden müssen, wobei ein zweidimensionales Spektrum entsteht.

Die Abstände benachbarter Ordnungszeilen im Spektrum ergeben sich aus dem freien Spektralbereich der Echelle-Beugungsordnungen und dem Dispersionsverlauf des Querdispersionselementes.

In Echelle-Polychromatoren, welche einen ausgedehnten Wellenlängenbereich erfassen müssen, werden aufgrund ihrer hohen Transmission und der eindeutigen Dispersion bei der Lichtbrechung ausschließlich Prismen zur Querdispersion eingesetzt. Daraus resultiert jedoch zwangsläufig eine ungleichmäßige Trennung der Ordnungszeilen. Entsprechend dem Dispersionsverlauf aller Prismenmaterialien steigt die Ordnungstrennung vom langwelligen Ende des Spektrums bei niedrigen Ordnungszahlen zum kurzwelligen Ende bei hohen Ordnungszahlen auf ein Vielfaches an. Die Breite der Ordnungszeilen wird im Echelle-Polychromator durch die Breite des Querspaltes, welcher als eine Eintrittsspaltkomponente das Bündel in Richtung der Prismen-Dispersion begrenzt, bestimmt.

In allen bekannten Echelle-Polychromator-Anordnungen, die ein Prisma zur Ordnungstrennung verwenden, wurde die Breite des Querspaltes bisher stets so gewählt, daß die langwelligsten Ordnungszeilen im Echelle-Spektrum bis auf einen aberrationsbedingten minimalen Zwischenraum aneinander liegen.

Da die Breite des Querspaltes für alle Wellenlängen gleich ist, entstehen im Spektrum mit steigender Ordnungszahl immer größere Freiflächen ohne Informationsgehalt zwischen den Ordnungen.

Durch einen breiteren Querspalt ließen sich diese Freiflächen zur Erhöhung des Lichtleitwertes nutzen, jedoch kann die damit verbundene Überlappung der Ordnungen im langwelligen Spektralbereich im allgemeinen nicht toleriert werden.

Der Lichtleitwert eines Echelle-Polychromators ist somit durch die geringe Querspaltbreite begrenzt und im gesamten Spektralbereich konstant. Die Beugungseffektivität des Echelle-Gitters, die Reflexionskoeffizienten der Spiegeloptiken und die Transmission des Prismenmaterials nehmen jedoch in Richtung kurzer Wellenlängen ab.

Das Signal/Rausch-Verhältnis wird darüberhinaus bei spektralphotometrischen Messungen im ultravioletten Spektralbereich insbesondere bei Quellen mit einem Maximum der Strahldichte im visuellen oder NIR-Bereich durch einen erhöhten Streulichtpegel zusätzlich reduziert und ist in vielen Anwendungsfällen nur unzureichend.

Aufgabe der Erfindung ist es, das Signal/Rausch-Verhältnis bei spektralphotometrischen Messungen mit einem Echelle-Polychromator insbesondere im ultravioletten Spektralbereich zu erhöhen und so der abnehmenden Gesamteffektivität des Spektrometers in diesem Spektralbereich entgegenzuwirken. Dies soll durch eine Anordnung für einen Echelle-Polychromator erreicht werden, welche die Ausnutzung der im Polychromator vorhandenen, aus der ungleichmäßigen Trennung der Beugungsordnungen resultierenden Freiflächen zur Erhöhung des Lichtleitwertes ermöglicht.

Aus der FR-A-2566902 ist eine Echelle-Spektrometeranordnung bekannt, bestehend aus Eintrittspaltanordnung, Kollimatoroptik, Prisma, Echelle-Gitter und Kameraoptik, bei der die Eintrittsspaltanordnung aus zwei räumlich voneinander getrennten Komponenten, dem Hauptspalt und dem Querspalt, besteht und die Kameraoptik für die Wellenlängeneinstellung drehbar montiert ist.

Aus der GB-A-2204946 ist ebenfalls eine Echelle-Spektrometeranordnung bekannt mit einer aus Haupt- und Querspalt bestehenden Eintrittspaltanordnung, Kollimatoroptik, Prisma Echelle-Gitter und drehbarer Kameraoptik, wobei das Prisma um zwei Achsen drehbar und die Eintrittsspaltanordnung in ihrer Höhe über der Grundplatte einstellbar ist, womit Spektrenverzerrungen ausgeglichen werden können, die durch Bauelemente- und Aufstellungstoleranzen resultieren.

Die Aufgabe wird erfindungsgemäß dadurch gelöst, daß dem Polychromator eine dispersive und polychromatische Beleuchtungseinrichtung vorgeschaltet ist, gebildet aus Eintrittsspaltanordnung, Kollimatoroptik, Prisma und Kameraoptik, wobei die Eintrittsspaltanordnungen sowohl des Echelle-Polychromators als auch der Beleuchtungseinrichtung aus einem Hauptspalt zur Bündelbegrenzung in Gitter-Dispersionsrichtung und einem Querspalt zur Bündelbegrenzung in Richtung der Dispersion des Prismas im Polychromator bestehen. Der gesamte vom Polychromator zu verarbeitende Wellenlängenbereich wird als Spektrum der Beleuchtungseinrichtung mit vernachlässigbarer Aberration vollständig auf den Querspalt des Echelle-Polychromators abgebildet. Die Dispersion der Beleuchtungseinrichtung verläuft in Richtung der Querdispersion des Prismas des Echelle-Polychromators.

Die dispersionsbestimmte geometrische Breite des Spektrums der Beleuchtungseinrichtung für den gesamten vom Polychromator zu verarbeitenden Wellenlängenbereich ist geringer als die Breite des Querspalts des Echelle-Polychromators. Teile der Strahlenbündel des Spektrums der Beleuchtungseinrichtung werden durch den Querspalt des Echelle-Polychromators ausgeblendet.

Haupt- und Querspalt der Eintrittsspaltanordnung des Polychromators können in unterschiedlichem Abstand zur Kollimatoroptik desselben angeordnet sein, Kollimatoroptik und Kameraoptik der Beleuchtungseinrichtung können sphärische bzw. torische Hohlspiegel sein. In diesem Fall liegt das tangentiale Bild der Eintrittsspaltanordnung der Beleuchtungseinrichtung im Hauptspalt des Polychromators, während das sagittale Bild der Eintrittsspaltanordnung der Beleuchtungseinrichtung im Querspalt des Polychromators liegt.

Die Breite des Querspalts des Echelle-Polychromators kann so gewählt werden, daß sie nicht wie bisher dem geringsten, sondern dem größten geometrischen Abstand zwischen jeweils zwei benachbarten Beugungsordnungen im Echelle-Spektrum entspricht.

Wenn das Bild des Querspaltes der Beleuchtungseinrichtung für die kürzeste Wellenlänge des Echelle-Spektrums gerade die Breite des Querspaltes des Echelle-Polychromators ausfüllt, dann ist der Lichtleitwert des Gesamtsystems für diese Wellenlänge maximal.

Je nach Wahl der dispersionsbedingten geometrischen Spektrenbreite der Beleuchtungseinrichtung werden Bündel größerer Wellenlängen durch den Querspalt des Echelle-Polychromators ausgeblendet.

Die Ausnutzung der Spektrenfläche im Echelle-Polychromator ist dann optimal, wenn die dispersionsbedingte geometrische Spektrenbreite der Beleuchtungseinrichtung für die Mittelpunktstrahlen der Grenzwellenlängen des Echelle-Spektrums gerade mit der Differenz zwischen den Ordnungsabständen bei diesen Wellenlängen im Echelle-Spektrum übereinstimmt. Die wirksame Bündelbreite am Ort des Querspalts des Echelle-Polychromators nimmt durch die selektive Abschattung an einer Spaltschneide des Querspalts mit steigender Wellenlänge proportional zu den sich verringernden Ordnungsabständen im Echellespektrum ab. Der Lichtleitwert des Gesamtsystems ist für den langwelligen Spektralbereich reduziert. Bei Vergrößerung der Lineardispersion der Beleuchtungseinrichtung kann die wirksame Querspalt-Breite des Polychromators und damit die Ordnungszeilenbreite im langwelligen Teil des Echelle-Spektrums weiter verringert werden. Innerhalb des Spektrums ist so eine Variation des Lichtleitwertes von bis zu zwei Größenordnungen möglich. Diese Maßnahme kann bei der Untersuchung von Quellen mit relativ hoher Strahldichte im langwelligen Spektralbereich dazu benutzt werden, den Streulichtpegel im Polychromator zu senken und das Signal/Rausch-Verhältnis im ultravioletten Bereich weiter zu verbessern.

Der Strahlungsempfänger in der Fokalfläche des Echelle-Polychromators muß zweckmäßigerweise an die geometrischen Verhältnisse im Echelle-Spektrum angepaßt sein. Die erfindungsgemäße Lösung läßt sich auch auf Polychromatoren mit eindimensionaler Dispersion anwenden.

Die Erfindung soll nachstehend an einem Ausführungsbeispiel näher erläutert werden.

In der zugehörigen Zeichnung zeigen:

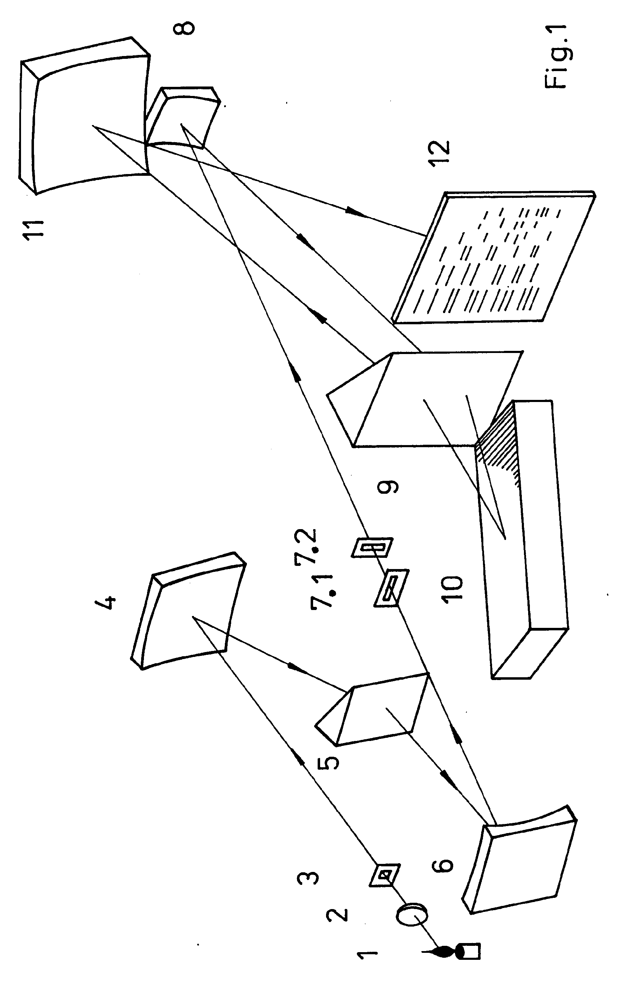

Fig. 1: eine schematische Darstellung der optischen Anordnung eines Echelle-Polychromators mit vorgeschalteter Beleuchtungsanordnung,

Fig. 2: eine schematische Darstellung der Begrenzung der Strahlenbündel an der Spaltanordnung des Echelle-Polychromators.

Die Strahlung der Quelle 1 wird mittels einer achromatischen Linsenkombination 2 auf die Eintrittsspaltanordnung 3 der dispersiven Beleuchtungseinrichtung abgebildet. Die sphärische Kollimatoroptik 4, das Prisma 5 und die sphärische Kameraoptik 6 befinden sich in Czerny-Turner-Anordnung und erzeugen ein komafreies astigmatisches Bild der Eintrittsspaltanordnung 3 der Beleuchtungseinrichtung am Ort der Eintrittsspaltanordnung 7 des Echelle-Polychromators. Das tangentiale Bild befindet sich im Hauptspalt 7.1 des Polychromators. Das sagittale Bild entsteht in der Ebene des Querspaltes 7.2.

Jede der beiden Eintrittsspaltanordnungen 3 bzw. 7 besteht aus einem Haupt- und einem Querspalt, wobei der Hauptspalt der Begrenzung der Strahlenbündel in der Hauptdispersionsrichtung und der Querspalt der Begrenzung der Strahlenbündel in der Querdispersionsrichtung liegt.

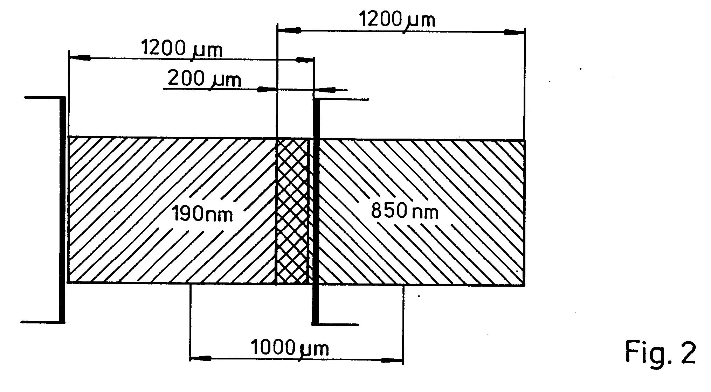

Während in dem hier dargestellten Fall bei der Eintrittsspaltanordnung 7 des Echelle-Polychromators Hauptspalt 7.1 und Querspalt 7.2 hintereinander angeordnet sind, liegen bei der Eintrittsspaltanordnung 3 der dispersiven Beleuchtungseinrichtung die Spaltschneiden von Haupt- und Querspalt in einer Ebene. Das Dispersionsprisma 5 ist so angeordnet, daß ein Spektrum geringer Dispersion senkrecht zum Querspalt 7.2 entsteht. Durch den Querspalt 7.2 werden Teile der Bündel des Spektrums ausgeblendet. Die durch Hauptspalt 7.1 und Querspalt 7.2 hindurchtretende Strahlung durchläuft die sphärische Kollimatoroptik 8, das Querdispersionsprisma 9, das Echelle-Gitter 10, die Kameraoptik 11 und wird in der Fokalfläche auf der Empfängeranordnung 12 als zweidimensionales Spektrum abgebildet. Die optischen Bauelemente sind in "Tetraeder-Aufstellung" angeordnet. Die wesentlichen Parameter aller optischen Bauelemente sind in Tab. 1 angegeben. Die dispersive Beleuchtungseinrichtung ist so justiert, daß die Strahlung der kürzesten Wellenlänge des gesamten Spektralbereiches mit λ = 190 nm Haupt- und Querspalt 7.1 bzw. 7.2 gerade ohne Abschattung passieren kann. Für diese Wellenlänge liegt das sagittale Bild der Eintrittsspaltanordnung 3 der Beleuchtungseinrichtung gerade exakt im Querspalt 7.2 des Polychromators. Beide Querspalte besitzen bei dem Abbildungsverhältnis von 1:1 eine Breite von 1 200 μm, welche der Trennung der Beugungsordnungen 124 und 125 im Echelle-Spektrum entspricht (siehe Fig. 2).

Die dispersionsbedingte geometrische Breite des Spektrums der Beleuchtungseinrichtung für den Spektralbereich des Polychromators von 190 bis 850 nm beträgt am Ort des Querspaltes 7.2 genau 1 000 μm. Damit wird vom langwelligsten Bündel mit λ = 852 nm durch eine Spaltschneide des Querspaltes 7.2 genau 1 000 μm abgeblendet, so daß den Querspalt 7.2 ein Restlichtbündel von 200 μm Breite passieren kann. Diese Breite entspricht genau der Trennung der im Echelle-Spektrum am engsten benachbarten Beugungsordnungen 27 bzw. 28 bei 852 nm.

Bei Verwendung gleicher Materialien für die Prismen 5 und 9 entspricht die resultierende virtuelle Breite des Querspaltes bei jeder Wellenlänge genau der Ordnungstrennung am entsprechenden Ort im Echelle-Spektrum. Alle Beugungsordnungen im Spektrum liegen dicht beieinander, wobei die Ordnungshöhe kontinuierlich in Richtung kurzer Wellenlängen zunimmt. Der Lichtleitwert für die Wellenlänge λ = 193 nm ist bei erfindungsgemäßer Anwendung der dispersiven und polychromatischen Beleuchtungseinrichtung gegenüber konventioneller Ausleuchtung des Spektrometers um einen Faktor 6 größer, ohne daß die Parameter des Echelle-Polychromators verändert werden müssen. Um den Vorteil des höheren Lichtleitwertes ausnutzen zu können, ist die Empfängeranordnung als Kombination einzelner CCD-Zeilensensoren mit angepaßter Pixelgeometrie ausgebildet, welche die interssierenden Spektralbereiche des Echelle-Spektrums auszumessen erlauben.

Tabelle 1

Beleuchtungseinrichtung

Eintrittsspaltanordnung:      Breite Querspalt 1200 μm
     Breite Hauptspalt 60 μm

Kollimatoroptik:
Kameraoptik:    }     sphärisch R = 200 mm

Prisma:     $\varepsilon = 5^\circ$

Echelle-Polychromator
Eintrittsspaltanordnung:      Breite Querspalt 1200 μm
     Breite Hauptspalt 40 μm

Kollimatoroptik :
Kameraoptik :    }     sphärisch R = 1000 mm

Prisma:     $\varepsilon = 25^\circ$

Echelle-Gitter:     75 Furchen/mm, $\theta_B = 64,2^\circ$, $= 68,2^\circ$

Spektrum:     Fläche 65 x 50 mm$^2$
     Ordnungstrennung bei 190 nm: 1220 μm
                   250 nm: 670 μm
                   500 nm: 270 μm
                   850 nm: 210 μm

EP 0 442 596 B1

Aufstellung der verwendeten Bezugszeichen

| | |
|---|---|
| 1 | Strahlungsquelle |
| 2 | Linse |
| 3 | Eintrittsspaltanordnung |
| 4 | Kollimatoroptik |
| 5 | Prisma |
| 6 | Kameraoptik |
| 7 | Eintrittsspaltanordnung |
| 7.1 | Hauptspalt |
| 7.2 | Querspalt |
| 8 | Kollimatoroptik |
| 9 | Prisma |
| 10 | Echelle-Gitter |
| 11 | Kameraoptik |
| 12 | Empfängeranordnung |

**Patentansprüche**

1. Polychromator-Anordnung mit einem Echelle-Polychromator, bestehend aus Eintrittsspaltanordnung, Kollimatoroptik (8), Prisma (9), Echelle-Gitter (10), Kameraoptik (11) und Empfängeranordnung (12), wobei die Eintrittsspaltanordnung aus einem Hauptspalt (7.1) zur Bündelbegrenzung in Gitter-Dispersionsrichtung und einem Querspalt (7.2) zur Bündelbegrenzung in Richtung der Dispersion des Prismas im Echelle-Polychromator besteht, und mit einer Beleuchtungseinrichtung, dadurch gekennzeichnet,
    - daß die Beleuchtungseinrichtung eine dispersive und polychromatische Beleuchtungseinrichtung ist, die dem Echelle-Polychromator vorgeschaltet ist, bestehend aus Eintrittsspaltanordnung (3), Kollimatoroptik (4), Prisma (5) und Kameraoptik (4), wobei die Eintrittsspaltanordnung (3) der Beleuchtungseinrichtung aus einem Hauptspalt zur Bündelbegrenzung in Gitter-Dispersionsrichtung und einem Querspalt zur Bündelbegrenzung in Richtung der Dispersion des Prismas im Echelle-Polychromator besteht,
    - daß der gesamte vom Polychromator zu verarbeitende Wellenlängenbereich als Spektrum der Beleuchtungseinrichtung mit vernachlässigbarer Aberration vollständig auf den Querspalt (7.2) des Echelle Polychromators abgebildet wird,
    - daß die Dispersion der Beleuchtungseinrichtung in Richtung der Querdispersion des Prismas (9) des Echelle-Polychromators verläuft,
    - daß die dispersionsbestimmte geometrische Breite des Spektrums der Beleuchtungseinrichtung für den gesamten vom Polychromator zu verarbeitenden Wellenlängenbereich geringer ist als die Breite des Querspalts (7.2) des Echelle-Polychromators und
    - daß Teile der Strahlenbündel des Spektrums der Beleuchtungseinrichtung durch den Querspalt (7.2) des Echelle-Polychromators ausgeblendet werden.

2. Polychromator-Anordnung nach Anspruch 1, bei dem der Hauptspalt (7.1) und der Querspalt (7.2) der Eintrittsspaltanordnung (7) des Polychromators in unterschiedlichem Abstand zur Kollimatoroptik (8) des Polychromators angeordnet und Kollimatoroptik (4) und Kameraoptik (6) der Beleuchtungseinrichtung als sphärische bzw. torische Hohlspiegel ausgebildet sind, dadurch gekennzeichnet, daß das tangentiale Bild der Eintrittsspaltanordnung (3) der Beleuchtungseinrichtung im Hauptspalt (7.1) des Polychromators liegt und daß das sagittale Bild der Eintrittsspaltanordnung (3) der Beleuchtungseinrichtung im Querspalt (7.2) des Polychromators liegt.

3. Polychromator-Anordnung nach Anspruch 1, dadurch gekennzeichnet, daß die Breite des Querspaltes (7.2) des Polychromators gleich dem Abstand zwischen den beiden kurzwelligsten Beugungsanordnungen im Spektrum des Echelle-Polychromators ist.

4. Polychromator-Anordnung nach Anspruch 1, dadurch gekennzeichnet, daß die Dimension des Querspaltes der Beleuchtungseinrichtung so gewählt ist, daß sein monochromatisches Bild der kürzesten Wellenlänge des Wellenlängenbereiches des Polychromators genau den Querspalt (7.2) des Polychromators ausleuchtet.

5

**5.** Polychromator-Anordung nach Anspruch 1, dadurch gekennzeichnet, daß die dispersionsbestimmte geometrische Breite des Spektrums der Beleuchtungseinrichtung den gesamten vom Polychromator zu verarbeitenden Wellenlängenbereich gleich der Differenz zwischen der größten und der geringsten Ordnungstrennung im Echelle-Polychromator ist.

## Claims

**1.** Polychromator assembly with an echelle polychromator, consisting of inlet gap assembly, collimator lens (8), prism (9), echelle grid (10), camera lens (11) and receiver assembly (12), wherein the inlet gap assembly consists of a main gap (7.1) for limiting the beam in the direction of dispersion of the grid and a transverse gap (7.2) for limiting the beam in the direction of dispersion of the prism in the echelle polychromator, and with a lighting device, characterised

- in that the lighting device is a dispersive and polychromatic lighting device which is mounted in front of the echelle polychromator, consisting of inlet gap assembly (3), collimator lens (4), prism (5) and camera lens (4), wherein the inlet gap assembly (3) of the lighting device consists of a main gap for limiting the beam in the direction of dispersion of the grid and a transverse gap for limiting the beam in the direction of dispersion of the prism in the echelle polychromator,
- in that the whole wavelength range to be processed by the polychromator as the spectrum of the lighting device with negligible aberration is fully projected onto the transverse gap (7.2) of the echelle polychromator,
- in that the dispersion of the lighting device extends in the direction of transverse dispersion of the prism (9) of the echelle polychromator,
- in that the dispersion-related geometrical width of the spectrum of the lighting device for the whole wavelength range to be processed by the polychromator is smaller than the width of the transverse gap (7.2) of the echelle polychromator, and
- in that portions of the beams of the spectrum of the lighting device are blanked out by the transverse gap (7.2) of the echelle polychromator.

**2.** Polychromator assembly according to claim 1, in which the main gap (7.1) and the transverse gap (7.2) of the inlet gap assembly (7) of the polychromator are arranged at different distances from the collimator lens (8) of the polychromator, and the collimator lens (4) and camera lens (6) of the lighting device are constructed as spherical or toroidal concave mirrors, characterised in that the tangential image of the inlet gap assembly (3) of the lighting device is located in the main gap (7.1) of the polychromator and in that the sagittal image of the inlet gap assembly (3) of the lighting device is located in the transverse gap (7.2) of the polychromator.

**3.** Polychromator assembly according to claim 1, characterised in that the width of the transverse gap (7.2) of the polychromator is equal to the distance between the two shortest-wave diffraction assemblies in the spectrum of the echelle polychromator.

**4.** Polychromator assembly according to claim 1, characterised in that the dimension of the transverse gap of the lighting device is selected in such a way that its monochromatic image of the shortest wavelength of the wavelength range of the polychromator exactly illuminates the transverse gap (7.2) of the polychromator.

**5.** Polychromator assembly according to claim 1, characterised in that the dispersion-related geometrical width of the spectrum of the lighting device for the whole wavelength range to be processed by the polychromator is equal to the difference between the maximum and minimum divisions of order in the echelle polychromator.

## Revendications

**1.** Montage de polychromateur, comprenant un polychromateur échelle constitué par un dispositif à fentes d'entrée, une optique de collimation (8), un prisme (9), un réseau échelle (10), une optique de chambre photographique (11) et un dispositif récepteur (12), le dispositif à fentes d'entrée étant constitué par une fente principale (7.1) destinée à délimiter le faisceau dans la direction de la dispersion du réseau et une fente transversale (7.2) destinée à délimiter le faisceau dans la direction de la dispersion du prisme dans le polychromateur échelle, et comprenant un dispositif d'éclairage, caractérisé :

- par le fait que le dispositif d'éclairage est un dispositif d'éclairage dispersif et polychromatique qui est monté en amont du polychromateur et qui est constitué par un dispositif à fentes d'entrée (3), une optique de collimation (4), un prisme (5), et une optique de chambre photographique (6), cependant que le dispositif à fentes d'entrée (3) du dispositif d'éclairage est constitué par une fente principale destinée à délimiter le faisceau dans la direction de dispersion du réseau et par une fente transversale destinée à délimiter le faisceau dans la direction de dispersion du prisme dans le polychromateur échelle,
- par le fait que, sur la fente transversale (7.2) du polychromateur échelle, la totalité de la gamme de longueurs d'onde qui doit être traitée par le polychromateur fournit intégralement et avec une aberration négligeable une image constituée par un spectre du dispositif d'éclairage,
- par le fait que la dispersion du dispositif d'éclairage s'étend dans la direction de la dispersion transversale du prisme (9) du polychromateur échelle,
- par le fait que la largeur géométrique du spectre du dispositif d'éclairage sur la totalité de la gamme de longueurs d'onde qui doit être traitée par le polychromateur, largeur qui est déterminée par la dispersion, est inférieure à la largeur de la fente transversale (7.2) du polychromateur échelle, et :
- par le fait que des parties du faisceau lumineux du spectre du dispositif d'éclairage sont arrêtées par la fente transversale (7.2) du polychromateur échelle.

2. Montage de polychromateur selon la revendication 1, dans lequel la fente principale (7.1) et la fente transversale (7.2) du dispositif à fentes d'entrée (7) du polychromateur sont disposées à des distances différentes de l'optique de collimation (8) du polychromateur, cependant que l'optique de collimation (4) et l'optique de chambre photographique (6) du dispositif d'éclairage sont réalisées sous la forme de miroirs creux sphériques ou toriques, respectivement, caractérisé par le fait que l'image tangentielle du dispositif à fentes d'entrée (3) du dispositif d'éclairage est située dans la fente principale (7.1) du polychromateur, et par le fait que l'image sagittale du dispositif à fentes d'entrée (3) du dispositif d'éclairage est située dans la fente transversale (7.2) du polychromateur.

3. Montage de polychromateur selon la revendication 1, caractérisé par le fait que la largeur de la fente transversale (7.2) du polychromateur est égale à la distance entre les deux ordres de diffraction dont la longueur d'onde est la plus courte dans le spectre du polychromateur échelle.

4. Montage de polychromateur selon la revendication 1, caractérisé par le fait que la dimension de la fente transversale du dispositif d'éclairage est choisie d'une manière telle que son image monochromatique dont la longueur d'onde est la plus courte dans la gamme des longueurs d'onde du polychromateur éclaire exactement la fente transversale (7.2) du polychromateur.

5. Montage de polychromateur selon la revendication 1, caractérisé par le fait que la largeur géométrique du spectre du dispositif d'éclairage sur la totalité de la gamme de longueurs d'onde à traiter par le polychromateur, largeur qui est déterminée par la dispersion, est égale à la différence entre la plus grande et la plus petite séparation des ordres dans le polychromateur échelle.

Fig.1

Fig. 2